# FASCICULE DE BREVET EUROPEEN

(11) **EP 2 690 035 B1**
(45) Date de publication et mention de la délivrance du brevet: **10.08.2016**
(21) Numéro de dépôt: 13160921.6
(22) Date de dépôt: 25.03.2013
(51) Int. Cl.: B65D 85/804, A47J 31/06

(54) **Capsule pour la préparation d'une boisson telle que une capsule à café**
Kapsel für die Herstellung eines Getränks wie eine Kaffeekapsel
Capsule for preparing a beverage such as a coffee capsule

(30) Priorité: 23.07.2012 LU 92050
(43) Date de publication de la demande: 29.01.2014
(73) Titulaire: Brain Corp S.A., 3895 Foetz (LU)
(72) Inventeur: Brivois, Olivier, 75017 Paris (FR)
(74) Mandataire: Cabinet HERRBURGER

(56) Documents cités:
- EP-A1- 2 452 893
- WO-A1-2011/132214
- WO-A1-2011/154672
- WO-A1-2012/019902
- WO-A1-2012/042487
- WO-A1-2012/070000
- WO-A1-2012/076135
- FR-A1- 2 905 683

## Description

### Domaine de l'invention

La présente invention se rapporte à une capsule destinée à recevoir une substance pour la préparation d'une boisson lorsque la capsule est installée dans une machine de type machine à café ou à infusion pour y être tenue par un piston pendant le passage du liquide extracteur à travers la capsule et la substance qu'elle contient, la capsule ayant un fond perforé et une paroi latérale s'inscrivant globalement dans un tronc de cône et un rebord recevant un opercule après chargement de la capsule avec la substance.

### Etat de la technique

Depuis des décennies (1970), il est connu de préparer des boissons telles que du café à l'aide de machines dans, lesquelles se place une capsule ou dosette contenant du café moulu. La capsule est ensuite bloquée dans la machine par un piston pour être traversée par de l'eau à température élevée et sous pression élevée passant par des perforations réalisées au moment de la mise en .place de la capsule dans la machine ou par des perforations préalablement réalisées dans la capsule. Dans certains cas, la capsule est perforée et distribuée dans une enveloppe étanche que l'on ouvre au moment de placer la capsule dans la machine.

A titre d'exemple, de telles capsules sont connues notamment selon les documents EP 0 512 148 du 10.05.1991 et EP 512 468 du 04.05.1992.

Ces capsules connues du type défini ci-dessus ont une forme de coupelle avec un fond et une paroi latérale sensiblement tronconique terminée par un bord circulaire sur le grand côté de la forme tronconique. Le bord circulaire reçoit un opercule soudé sur le rebord après chargement de la capsule avec la substance servant à la préparation de la boisson. Les capsules connues sont fermées de manière hermétique pour garantir la conservation de la substance.

Il existe également des capsules pré-perforées mais vides, que l'utilisateur charge lui-même avec le café de son choix puis ferme la capsule avec un opercule pour pouvoir placer la capsule dans la machine. Il peut ainsi se préparer une série de capsules qu'il utilisera à court terme.

D'autre types de capsules sont connus par exemple de WO 2012/042487, FR 2905683, WO2012/019902.

Il existe également des capsules remplies dont le fond est pré-perforé et qui sont conditionnées séparément dans un emballage étanche pour garantir la qualité et la fraîcheur de la substance contenue dans la capsule.

Mais les capsules connues ont des inconvénients de tenue et présentent des risques de déformation de la capsule au moment du passage du liquide chaud sous pression, de sorte qu'elles peuvent se coincer dans la machine ou de ne pas permettre la fermeture étanche avec le piston de sorte que l'eau chaude sous pression contourne au moins partiellement la capsule sans traverser la substance à l'intérieur de la capsule.

### But de l'invention

La présente invention a pour but de remédier aux inconvénients des solutions connues et se propose de développer une capsule recevant une substance telle que du café pour la confection d'une boisson, qui soit très rigide, et permette une bonne répartition de l'eau chaude sous pression à la traversée de la capsule et tout en évitant un défaut d'étanchéité de la position de la capsule dans la machine et le risque de contournement par l'eau sous pression.

### Exposé et avantages de l'invention

A cet effet, l'invention concerne une capsule selon la revendication 1.

La structure de la paroi périphérique composée de différentes sections et de sa combinaison avec le fond rigidifié par une nervure avec une partie centrale et une couronne, assurent une bonne répartition des contraintes engendrées par l'arrivée brutale de l'eau très chaude et à forte pression, notamment contre le fond et ensuite contre les parois de la capsule.

La nervure de rigidification du fond de la capsule garantit la bonne tenue de la capsule au moment de l'arrivée de l'eau chaude sous forte pression de sorte que les trous du fond perforé permettent une bonne répartition de l'eau sous pression à l'intérieur de la capsule et l'extraction maximale de la substance au passage de l'eau. Cette bonne tenue du fond au moment de l'arrivée de l'eau sous pression garantit également la bonne tenue du rebord de la capsule entre la grille de la machine et le bord du piston de la machine, évitant des fuites d'eau sous pression qui risqueraient de contourner la capsule sans la traverser.

La bonne stabilité de forme de la capsule facilite également son extraction au moment de l'ouverture de la machine après le passage de l'eau sous pression. La capsule ne risque pas d'être retenue ou coincée dans le piston.

Suivant une autre caractéristique avantageuse, les trous ont une forme d'entonnoir ouvert vers l'extérieur et dont la partie rétrécie débouche dans la capsule.

Cette forme d'entonnoir crée des jets de liquide dans le volume de la capsule pour bien agiter la substance à l'intérieur de celle-ci et favoriser efficacement l'extraction.

Suivant une autre caractéristique avantageuse, le fond perforé comporte une partie centrale plane à l'intérieur de la nervure circulaire et cette partie centrale a un dôme de rigidification rentrant dans le volume de la capsule. Cette forme particulière du fond renforce la tenue et la rigidité avec les avantages développés ci-dessus.

Suivant une autre caractéristique, le fond est muni de trous répartis sur des cercles concentriques. Cette répartition des trous facilite la fabrication et garantit la régularité de la distribution de l'eau sous pression dans la capsule.

Suivant une autre caractéristique, la nervure circulaire de rigidification a une section rectangulaire avec des côtés et un dessus, ce dernier étant muni de trous. La nervure de rigidification a ainsi également une fonction de répartition de l'eau sous pression à l'intérieur de la capsule du fait du décalage axial des trous réalisés dans les parties planes du fond dans la zone entourée par la nervure et dans la zone extérieure par rapport aux trous réalisés dans le dessus de la nervure (le dessus est ici la partie la plus enfoncée de la nervure à l'intérieur du volume de la capsule).

Suivant une caractéristique avantageuse, la nervure est bordée par une couronne plane faisant la jonction avec un cône de rigidification reliant le fond à la paroi latérale. Cette combinaison de formes est particulièrement intéressante pour éviter l'enfoncement partiel de la capsule au niveau de la jonction entre le fond et la paroi latérale.

Suivant une autre caractéristique avantageuse, les cercles concentriques de trous sont répartis dans la partie centrale du fond, dans la nervure circulaire comme déjà indiqué et dans la couronne plane au-delà de la nervure circulaire. La répartition des trous sur toute la surface basse (fond) de la capsule permet à l'eau de traverser la capsule en évitant une trop grande différence de pression entre l'extérieur de la capsule soumise à l'arrivée brutale de l'eau chaude sous forte pression et l'intérieur de la capsule qui est à ce moment à la pression atmosphérique.

Suivant une autre caractéristique avantageuse, la capsule a un rebord avec un dessus formé par un anneau périphérique plat pour recevoir un opercule et un dessous formé par un anneau nervuré constituant un siège d'étanchéité pour recevoir la surface frontale du piston de la machine. Cette forme de joint d'étanchéité réalisé dans le dessous du rebord garantit la bonne étanchéité entre le piston et la capsule. En particulier, les lèvres circulaires de l'anneau nervuré ont une section triangulaire formant ainsi un joint en labyrinthe avec le bord du piston de la machine.

Suivant une caractéristique avantageuse, la lèvre circulaire la plus à l'extérieur est plus haute que les autres et permet de mieux coopérer avec le bord du piston et de coincer celui-ci.

La capsule étant réalisée en une matière plastique, les lèvres ont une certaine souplesse et se déforment plus ou moins au contact du bord du piston, ce qui garantit l'étanchéité.

Suivant une autre caractéristique, le dessous du bord comporte une couronne extérieure de rigidification.

La capsule selon l'invention est fabriquée en matière plastique injectée. Elle est diffusée vide pour les clients particuliers qui remplissent les capsules avec les produits de leur choix et les ferment avec un opercule autocollant livré de préférence en même temps que les capsules sous la forme de lots conditionnés. Les capsules peuvent également être fournies à des torréfacteurs qui les remplissent avec les produits, notamment les cafés de leur choix, pour les conditionner en lots ou en capsules unitaires, dans des emballages hermétiques garantissant la bonne conservation des caractéristiques organoleptiques des produits dans les capsules.

### Dessins

La présente invention sera décrite ci-après de manière plus détaillée à l'aide d'exemples de réalisation d'une capsule selon l'invention représentés dans les dessins annexés dans lesquels :
- la figure 1 est une vue isométrique d'une capsule en vue de dessous,
- la figure 2 est une vue isométrique d'une capsule en vue de dessus,
- la figure 3 montre dans ses parties 3A-3D différentes vue de la capsule, à savoir :
- la figure 3A est une vue de côté de la capsule,
- la figure 3B est une coupe axiale de la capsule selon le plan diamétral AA de la figure 3C,
- la figure 3C est une vue de dessus de la capsule,
- la figure 3D est une vue de dessous de la capsule,
- la figure 4 est une vue en coupe à échelle agrandie de la partie B de la figure 3B d'un mode de réalisation du rebord de capsule selon l'invention,
- la figure 5 est une vue en coupe analogue à celle de la figure 4 de la partie B de la figure 3B d'un autre mode de réalisation de rebord de capsule,
- la figure 6 est une vue en coupe de détail de la nervure circulaire du fond de la capsule, correspondant à la partie C de la figure 3B,
- la figure 7 montre l'empilage de deux capsules,
- la figure 8 montre très schématiquement l'installation d'une capsule dans une machine à préparer la boisson.

### Description de modes de réalisation de l'invention

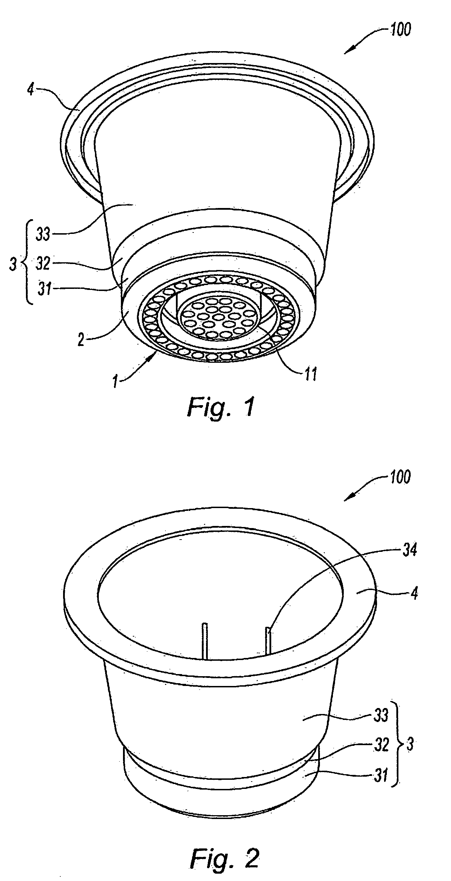

Selon les figures 1 et 2, l'invention a pour objet une capsule perforée 100 représentée vide, destinée à recevoir une substance servant à la préparation d'une boisson. La capsule y est représentée seule sans l'opercule mis en place sur le dessus une fois la capsule chargée.

La capsule 100 est une pièce ayant une forme de révolution autour d'un axe. Pour faciliter la présentation, cette capsule est montrée avec son ouverture tournée vers le haut selon les dessins. Mais dans une machine à café ou appareil de ce type, comme le liquide traversant la substance contenue dans la capsule arrive du fond pour passer ensuite à travers le dessus, la capsule est généralement une position d'axe horizontal ou d'axe vertical mais retournée dans ce dernier cas de sorte que le dessus avec l'opercule est tourné vers le bas.

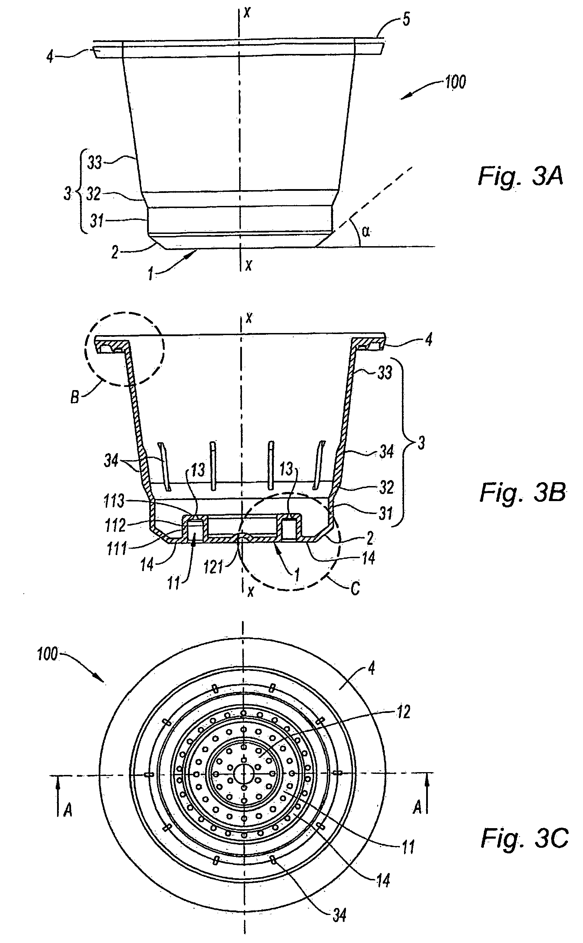

La capsule 100 se compose d'un fond perforé 1 muni d'une nervure circulaire 11 venant en saillie à l'intérieur du volume de la capsule et d'une paroi latérale 3 remontant à partir du fond 1 en s'élargissant suivant un profil s'inscrivant globalement dans une forme tronconique nécessaire à l'empilage des capsules vides, avant leur remplissage. Le fond 1 rejoint la paroi latérale 3 par un tronc de cône de rigidification 2, ayant un angle au sommet très grand (de l'ordre de 90°). La paroi latérale 3 se compose d'une partie cylindrique d'emboîtement 31 se poursuivant par un tronc de cône de jonction 32 relié à une partie principale en forme de tronc de cône 33 dont l'ouverture (grande base) est munie d'un rebord 4 destiné à recevoir un opercule 5 (figures 3A, 3B). La lèvre périphérique la plus à l'extérieur de l'anneau nervuré est de préférence plus haute que les autres de manière à serrer plus fortement le piston et améliorer encore l'étanchéité. Le tronc de cône principal 33 correspond à l'essentiel de la hauteur de la capsule 100.

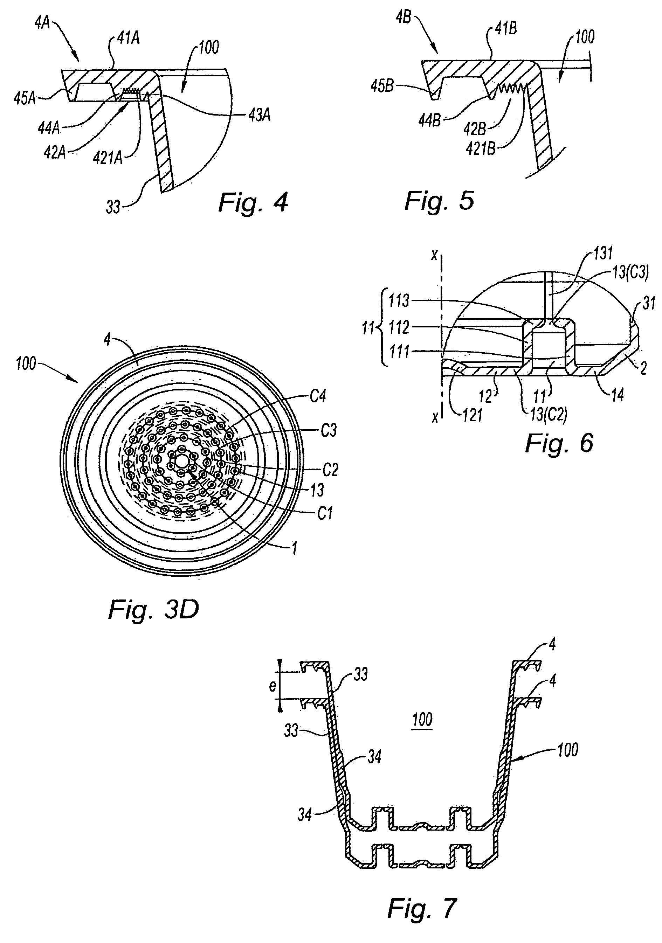

Le détail de la structure de la capsule 100 des figures 1 et 2 apparaîtra de manière plus précise à l'examen des figures 3 à 7.

La figure 3A est une vue de côté de la capsule 100 montrant le tronc de cône de rigidification 2 partant du plan du fond avec un angle α relativement grand (de l'ordre de 45°), rejoignant le cylindre d'emboîtement 31 qui rejoint lui-même, par un tronc de cône de jonction 32, le tronc de cône principal 33 de la capsule portant le rebord 4. L'opercule 5 a été représenté schématiquement.

La figure 3B est une vue en coupe mettant mieux en évidence la forme de la capsule 100 montrant notamment la structure particulière du fond 1 avec sa nervure circulaire 11 coaxiale à l'axe xx de la forme globale de révolution de la capsule. La nervure 11 constitue une gorge ouverte vers l'extérieur. L'intérieur de la capsule 100, à l'extrémité inférieure (selon l'orientation des figures 3A, 3B) du tronc de cône principal 33, est muni de lamelles 34 radiales et longitudinales destinées à rigidifier la paroi latérale et à faciliter l'emboitage de capsules les unes dans les autres tout en évitant leur collage et facilitant l'extraction d'une capsule d'une pile.

Le fond 1 est constitué par une surface plane 12 à l'intérieur de la surface délimitée par la nervure circulaire 11 et au centre, la surface plane 12 a un dôme 121. Au-delà de la nervure circulaire 11, le fond 1 a une couronne plane 14.

Le fond 1 est percé d'un ensemble de trous 13 comme cela apparaît aux figures 3B, 3C, 3D. Ces trous 13 sont répartis sur des cercles C1-C4 concentriques à la nervure circulaire 11 et à l'axe xx de la capsule. Les ensembles circulaires C1-C4 de trous 13 dans cet exemple sont au nombre de quatre et les trous sont de préférence décalés chaque fois en quinconce d'un ensemble circulaire C1-C4 à l'autre. Dans la surface 12 à l'intérieur de la nervure circulaire 11, le fond 1 a deux ensembles C1-C2 de trous 13, répartis sur deux cercles, six trous sur le premier cercle C1 et douze trous sur le deuxième cercle C2. La nervure circulaire 11 est également traversée par des trous 12, (C3) ; dans cet exemple, il s'agit de vingt trous. Enfin un ensemble C4 de trous 13 occupe la couronne 14 à l'extérieur de la nervure circulaire 11. Il s'agit dans ce cas de vingt six trous.

La répartition des trous 13 dans la surface du fond et leurs diamètres différents permettent d'obtenir un débit de liquide régulier dans toute la section de passage du liquide dans la substance de la capsule 100, c'est-à-dire dans la section de la capsule.

Le décalage axial (dans la direction xx) entre les trous 13 des surfaces 12, 14 et ceux de la nervure 11 crée des effets de turbulence et d'agitation du liquide au contact de la substance et favorisant l'extraction.

La figure 3C met en évidence la répartition régulière des trous 13 sur toute la surface du fond 1, y compris la nervure 11 mais à l'exclusion de la partie centrale 12 occupée par le dôme 121 de manière à ne pas créer de passage préférentiel de liquide suivant l'axe xx de la capsule 100.

La figure 3D est une vue de dessous de la capsule 100 montrant tout particulièrement la répartition homogène des trous 13 et leur forme en entonnoir. La section de cette forme en entonnoir très évasée vers l'extérieur avec un profil courbe des trous 13 à travers l'épaisseur de la paroi et un orifice de sortie du trou, petit, débouchant à l'intérieur de la capsule, crée un jet d'eau 131 très efficace comme cela est représenté pour le trou 13 du dessus 113 de la nervure 11. Les trous 13 ont de préférence la même section et la même forme. Le diamètre libre des trous 13 est de préférence de l'ordre de 0,3 mm.

Les figures 4 et 5 montrent à échelle agrandie deux formes de réalisation du rebord 4 de la capsule 100 selon la partie B de la figure 3B.

Selon la figure 4, le rebord 4A a une surface supérieure 41A plane pour la fixation de l'opercule 5. Le dessous du rebord 4A est occupé par un anneau nervuré 42A entourant directement le haut de la partie tronconique 33 de la capsule. Cet anneau nervuré 42A est constitué par plusieurs lèvres circulaires 421A de section sensiblement triangulaire bordées du côté intérieur et du côté extérieur (par rapport à l'axe xx) d'une couronne intérieure 43A et d'une couronne extérieure 44A délimitant cette surface nervurée. L'anneau nervuré 42A constitue le siège d'étanchéité contre lequel s'appuie le bord du piston maintenant la capsule en position active dans l'appareil formant un joint en labyrinthe.

Le dessous du rebord d'operculage 4A est muni extérieurement également d'une couronne de rigidification 45A.

Dans le cas du mode de réalisation de la figure 5, l'anneau nervuré 42B n'est bordé que d'une couronne de rigidification 44B, celle située directement à côté de l'amorce du tronc de cône 33 de la capsule ayant été supprimée. Les autres éléments sont identiques à ceux du mode de réalisation de la figure 4 et portent les mêmes références numériques qu'à la figure 4 mais avec le suffixe B, leur description n'étant pas reprise.

La figure 6 est une section à échelle agrandie de la moitié du fond 1 montrant la forme de section rectangulaire de la nervure circulaire 11, rigide, avec deux parois latérales 111, 112 et une partie supérieure 113 ; la nervure 11 forme une gorge ouverte dans le dessous de la capsule. La partie supérieure 113 est munie des trous 13 (C3).

La figure 6 montre la position d'un trou 13 (C3) qui traverse la partie supérieure 113 ainsi que celle d'un trou 13 adjacent du second cercle C2 de la partie centrale 12 du fond 1 ; le premier cercle de trous C1 n'est pas représenté dans cette vue en coupe du fait de la répartition en quinconce des trous.

La figure 7 montre l'empilage de deux capsules 100 selon l'invention qui sont maintenues écartées l'une de l'autre par les nervures 34 à l'intérieur de la partie tronconique 33 de chaque capsule.

Les rebords 4 des deux capsules 100 sont suffisamment écartés (distance e) pour faciliter la préhension de la capsule du dessus par son rebord 4.

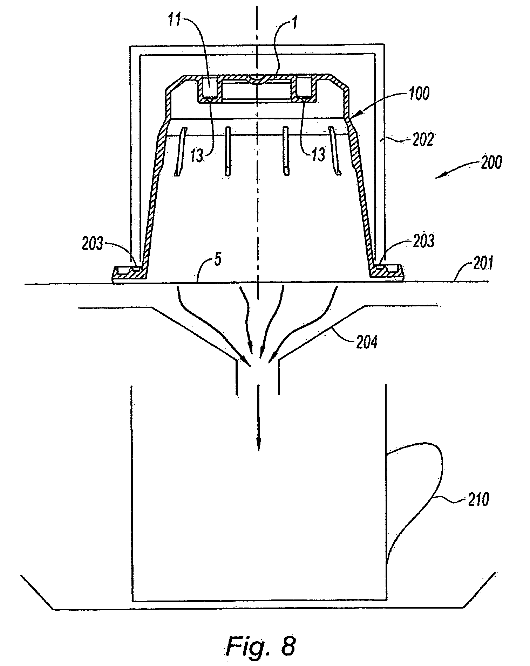

La figure 8 est une vue en coupe schématique montrant la disposition d'une capsule 100 selon l'invention dans une machine préparant la boisson avec la substance contenue dans la capsule. La capsule 100 est par exemple en position verticale renversée par rapport à la position de remplissage telle qu'elle apparaît aux figures 1, 2, 3A, 3B. La partie de la capsule avec son opercule 5 est appliquée contre la grille 201 de la machine 200. Un piston 202 de forme cylindrique coiffe la capsule 100 et s'appuie par son bord 203 contre l'anneau nervure 42 constituant le siège d'étanchéité, de manière à réaliser une fermeture étanche de l'enceinte délimitée par le piston 202 et la capsule 100 dont l'opercule 5 n'est pas encore percé.

Ensuite, le liquide sous pression (eau chaude sous pression) est envoyé dans l'enceinte du piston 202. Ce liquide passe par les différents trous 13 du fond 1 de la capsule 100 pour irriguer la substance contenue dans la capsule. La pression de liquide fait éclater l'opercule 5 qui se perce au niveau des mailles de la grille 201 contre laquelle est appliquée la capsule. Le liquide obtenu par le contact entre l'eau chaude sous pression et la substance est recueilli par une trémie 204 pour être conduit dans un réceptacle 210 tel qu'une tasse placée sous l'appareil 200.

Les capsules selon l'invention fabriquées en matière injectée sont diffusées et utilisées de différentes manières. Elles peuvent être distribuées par lots pour être remplies par l'utilisateur avec la substance de son choix pour constituer des dosettes utilisables dans une machine telle qu'une machine à café. Les capsules peuvent également être utilisées par un torréfacteur qui les remplit et les conditionne de manière étanche dans des emballes individuels ou par groupes, pour conserver les caractéristiques organoleptiques de la substance telles qu'une poudre de café, remplissant les capsules.

Dans le cas de l'utilisateur final qui remplit lui-même les capsules avec le produit tel que le café de son choix, celui-ci munira les capsules d'un opercule autocollant fourni séparément ou avec un lot de capsules.

**NOMENCLATURE**

| | | | |
|---|---|---|---|
| 100 | Capsule | | |
| 200 | Machine/appareil | | |
| 201 | Grille | | |
| 202 | Piston | | |
| 203 | Bord du piston | | |
| 204 | Trémie | | |
| 210 | Récipient | | |
| 1 | Fond | | |
| | 11 | Nervure | |
| | | 111 | Paroi latérale |
| | | 112 | Paroi latérale |
| | | 113 | Partie supérieure |
| | 12 | Partie centrale du fond/surface à l'intérieur de la nervure | |
| | | 121 | Dôme |
| | 13 | Trou | |
| | | 131 | jet de liquide sortant du trou 13 |
| | 14 | Couronne | |
| 2 | Cône de rigidification | | |
| 3 | Paroi latérale | | |
| | 31 | Partie cylindrique d'emboîtement | |
| | 32 | Tronc de cône de jonction | |
| | 33 | Tronc de cône principal | |
| 4, 4A, 4B Rebord | | | |
| | 41A, | B Surface supérieure | |
| | 42A, | B Anneau nervuré | |
| | | 421A, B Lèvres circulaires | |
| | 43A | Couronne intérieure | |
| | 44A, | B Couronne extérieure | |
| | 45A, | B Couronne de rigidification | |
| 5 | Opercule | | |
| C1, C2, C3, C4 Cercles de répartition des trous 13 | | | |
| xx | | | Axe de révolution de la capsule |

## Revendications

1. Capsule destinée à recevoir une substance pour la préparation d'une boisson lorsque la capsule est installée dans une machine de type machine à café ou à infusion pour y être tenue par un piston pendant le passage du liquide extracteur à travers la capsule et la substance qu'elle contient,
* la capsule a une paroi latérale s'inscrivant globalement dans un tronc de cône et un rebord sous lequel la paroi latérale est constituée par un tronc de cône principal et une partie proche du fond, de forme cylindrique, rejoignant d'une part le tronc de cône principal par un tronc de cône de jonction et d'autre part le fond par un tronc de cône de rigidification, la surface intérieure de la capsule étant garnie de lamelles longitudinales de rigidification,
**caractérisée en ce qu'**
- elle a un fond (1) perforé et un dessus fermé par un opercule (5),
- l'extrémité inférieure du tronc de cône principal (33) comporte des lamelles radiales et longitudinales de rigidification (34),
- le fond perforé (1) est rigidifié par une nervure circulaire (11) en saillie vers l'intérieur de la capsule, munie de trous (13) et bordée par une couronne plane (14) faisant la jonction avec le cône de rigidification (2) reliant le fond (1) à la paroi latérale (3), et
- la partie centrale (12) du fond, la nervure circulaire (11) et la couronne (14) au-delà de la nervure comportent des cercles concentriques (C1-C4) de trous (13).

2. Capsule selon la revendication 1,
**caractérisée en ce que**
les trous (13) ont une forme d'entonnoir ouvert vers l'extérieur et dont la partie rétrécie débouche dans la capsule.

3. Capsule selon la revendication 1,
**caractérisée en ce que**
le fond perforé (1) comporte une partie centrale (12) plane à l'intérieur de la nervure circulaire (11) et cette partie centrale a un dôme de rigidification (121) rentrant dans le volume de la capsule.

4. Capsule selon la revendication 1,
**caractérisée en ce que**
la nervure circulaire (11) de rigidification a une section rectangulaire avec des côtés (111, 112) et un dessus (113) muni de trous (13).

5. Capsule selon la revendication 1,
**caractérisée en ce qu'**
elle a un rebord (4) avec un dessus (41) formé par un anneau périphérique plat pour recevoir un opercule (5) et un dessous formé par un anneau nervuré (42A, B) constituant un siège d'étanchéité pour recevoir la surface frontale (203) du piston (201) de la machine (200).

6. Capsule selon la revendication 5,
**caractérisée en ce que**
l'anneau nervuré (42A, B) comporte des lèvres circulaires (421A, B) à section triangulaire formant un joint en labyrinthe pour le bord (203) du piston (202) de la machine (200).

7. Capsule selon la revendication 1,
**caractérisée en ce que**
l'anneau nervuré (42A, B) est bordé au moins d'un côté par une couronne de rigidification (43A, 44A, B).

8. Capsule selon la revendication 1,
**caractérisée en ce que**
le dessous du rebord (4, 4A, 4B) comporte une couronne extérieure de rigidification (44A, B).

## Patentansprüche

1. Kapsel, die dazu bestimmt ist, eine Substanz zur Herstellung eines Getränks aufzunehmen, wenn die Kapsel in eine Maschine vom Typ Kaffee- oder Teemaschine eingesetzt wird, um hier während des Durchgangs der Extraktionsflüssigkeit durch die Kapsel und die Substanz, die sie enthält, von einem Kolben gehalten zu werden,
* wobei die Kapsel Folgendes eine Seitenwand, die insgesamt in einen Kegelstumpf eingeschrieben werden kann, aufweist sowie einen Rand, unter dem die Seitenwand durch einen Hauptkegelstumpf und einen bodennahmen Teil mit zylindrischer Form gebildet ist, der einerseits durch einen Verbindungskegelstumpf an den Hauptkegelstumpf und andererseits durch einen Versteifungskegelstumpf an den Boden anschließt, wobei die Innenfläche der Kapsel mit längs verlaufende Versteifungslamellen versehen ist,
**dadurch gekennzeichnet, dass**
- sie einen perforierten Boden (1) und eine durch einen Deckel (5) verschlossene Oberseite aufweist,
- das untere Ende des Hauptkegelstumpfs (33) radiale und längs verlaufende Verstärkungslamellen (34) aufweist,
- der perforierte Boden (1) durch eine zum Inneren der Kapsel hin vorspringende kreisförmige Rippe (11) versteift ist, die mit Löchern (13) versehen ist und von einem ebenen Kranz (14) umrandet ist, der die Verbindung mit dem Versteifungskegel (2) bildet, der den Boden (1) mit der Seitenwand (3) verbindet, und
- der mittlere Teil (12) des Bodens, die kreisförmige Rippe (11) und der Kranz (14) jenseits der Rippe konzentrische Kreise (C1-C4) von Löchern (13) umfassen.

2. Kapsel nach Anspruch 1,
**dadurch gekennzeichnet, dass**
die Löcher (13) die Form eines Trichters aufweisen, der nach außen offen ist und dessen verengter Teil in die Kapsel mündet.

3. Kapsel nach Anspruch 1,
**dadurch gekennzeichnet, dass**
der perforierte Boden (1) einen ebenen mittleren Teil (12) im Inneren der kreisförmigen Rippe (11) aufweist und dieser mittlere Teil eine Versteifungskuppel (121) aufweist, die in das Volumen der Kapsel eintritt.

4. Kapsel nach Anspruch 1,
**dadurch gekennzeichnet, dass**
die kreisförmige Versteifungsrippe (11) einen rechteckigen Querschnitt mit Seiten (111, 112) und einer Oberseite (113) aufweist, die mit Löchern (13) versehen ist.

5. Kapsel nach Anspruch 1,
**dadurch gekennzeichnet, dass**
sie einen Rand (4) umfasst, der eine Oberseite (41) aufweist, die durch einen ebenen Umfangsring gebildet ist, um einen Deckel (5) aufzunehmen, und eine Unterseite, die durch einen gerippten Ring (42A, B) gebildet ist, der einen Dichtsitz zur Aufnahme der Vorderseite (203) des Kolbens (201) der Maschine (200) darstellt.

6. Kapsel nach Anspruch 5,
**dadurch gekennzeichnet, dass**
der gerippte Ring (42A, B) kreisförmige Lippen (421A, B) mit dreieckigem Querschnitt umfasst, die eine Labyrinthdichtung für den Rand (203) des Kolbens (202) der Maschine (200) bilden.

7. Kapsel nach Anspruch 1,
**dadurch gekennzeichnet, dass**
der gerippte Ring (42A, B) wenigstens an einer Seite durch einen Versteifungskranz (43A, 44A, B) umrandet wird.

8. Kapsel nach Anspruch 1,
**dadurch gekennzeichnet, dass**
die Unterseite des Rands (4, 4A, 4B) einen äußeren Verstärkungskranz (44A, B) umfasst.

## Claims

1. Capsule for receiving a substance for preparing a beverage when the capsule is installed in a machine of the coffee machine or beverage-making machine type in order to be held therein by a piston during passage of the extraction liquid through the capsule and the substance contained therein,
* the capsule has a side wall which is generally inscribed in a truncated cone and a rim beneath which the side wall is constituted by a principal truncated cone and a portion close to the base, of cylindrical shape, which meets on the one hand the principal truncated cone by means of a connecting truncated cone and on the other hand the base by means of a stiffening truncated cone, the inside surface of the capsule being provided with longitudinal stiffening strips,
**characterised in that**
- it has a perforated base (1) and a top which is closed by a lid (5),
- the bottom end of the principal truncated cone (33) comprises radial and longitudinal stiffening strips (34),
- the perforated base (1) is stiffened by a circular rib (11) which projects towards the inside of the capsule, is provided with holes (13) and is bordered by a flat ring (14) forming the connection with the stiffening cone (2) which joins the base (1) to the side wall (3), and
- the central portion (12) of the base, the circular rib (11) and the ring (14) beyond the rib comprise concentric circles (C1-C4) of holes (13).

2. Capsule according to claim 1,
**characterised in that**
the holes (13) have the shape of a funnel which is open to the outside and the narrow portion of which opens into the capsule.

3. Capsule according to claim 1,
**characterised in that**
the perforated base (1) comprises a flat central portion (12) inside the circular rib (11), and the central portion has a stiffening dome (121) which goes back into the volume of the capsule.

4. Capsule according to claim 1,
**characterised in that**
the circular stiffening rib (11) has a rectangular cross-section with sides (111, 112) and a top (113) provided with holes (13).

5. Capsule according to claim 1,
**characterised in that**
it has a rim (4) having a top (41) formed by a flat peripheral ring for receiving a lid (5) and a bottom formed by a ribbed ring (42A, B) which constitutes a seal seat for receiving the front surface (203) of the piston (201) of the machine (200).

6. Capsule according to claim 5,
**characterised in that**
the ribbed ring (42A, B) comprises circular lips (421 A, B) of triangular cross-section which form a labyrinth seal for the edge (203) of the piston (202) of the machine (200).

7. Capsule according to claim 1,
**characterised in that**
the ribbed ring (42A, B) is bordered at least on one side by a stiffening ring (43A, 44A, B).

8. Capsule according to claim 1,
**characterised in that**
the bottom of the rim (4, 4A, 4B) comprises an outer stiffening ring (44A, B).
